# EUROPÄISCHE PATENTSCHRIFT

(11) **EP 2 776 213 B1**
(45) Veröffentlichungstag und Bekanntmachung des Hinweises auf die Patenterteilung: **02.03.2016**
(21) Anmeldenummer: 12778288.6
(22) Anmeldetag: 17.10.2012
(51) Int. Cl.: B25B 21/02, F16D 37/02, F16D 5/00

(54) **SCHLAGWERK**
STRIKING MECHANISM
DISPOSITIF DE PERCUSSION

(30) Priorität: 07.11.2011 DE 102011085816; 12.12.2011 DE 102011088287
(43) Veröffentlichungstag der Anmeldung: 17.09.2014
(73) Patentinhaber: HILTI Aktiengesellschaft, 9494 Schaan (LI)
(72) Erfinder: HOOP, Alexander, CH-9494 Schaan (LI); WIERER, Michael, A-6700 Bludenz (AT); BINDER, Albert, CH-9470 Buchs (CH); PROFUNSER, Dieter, A-6835 Zwischenwasser (AT); BATTLOGG, Stefan, A-6771 St. Anton i. M. (AT); POESEL, Jürgen, A-6700 Bludenz (AT)
(74) Vertreter: Hilti Aktiengesellschaft Corporate Intellectual Property
(86) Internationale Anmeldenummer: PCT/EP2012/070533
(87) Internationale Veröffentlichungsnummer: WO 2013/068212

(56) Entgegenhaltungen:
- EP-A1- 1 462 219
- EP-A1- 1 677 022
- JP-A- 55 020 917
- US-A1- 2004 020 667

## Beschreibung

### GEBIET DER ERFINDUNG

Die vorliegende Erfindung betrifft ein Schlagwerk zum Erzeugen von Drehimpulsen, insbesondere eine handgehaltene Werkzeugmaschine mit einem solchen Schlagwerk,. gemäß dem Oberbegriff von Anspruch 1 und wie aus der EP 1 677 022 A1 bekannt.

### OFFENBARUNG DER ERFINDUNG

Das erfindungsgemäße Schlagwerk hat eine erste Welle und eine zweite Welle. Auf der ersten Welle sind ein oder mehrere Flügel befestigt. Die Flügel sind in einer Kammer der zweiten Welle drehbar angeordnet. Die Kammer ist mit einer magneto-rheologischen Flüssigkeit gefüllt. Eine Magnetfeldquelle an der zweiten Welle, erzeugt ein in der Kammer in Umfangsrichtung räumlich moduliertes Magnetfeld

Die erste Welle kann sich mit den Flügeln innerhalb der Kammer drehen. Die Flügel verdrängen dabei die magnetorheologische Flüssigkeit oder schieben die magnetorheologische Flüssigkeit in Umfangsrichtung vor sich her. Die auf die Flügel wirkende Kraft hängt von der scheinbaren Viskosität der Flüssigkeit ab, welche bei einer magnetorheologischen Flüssigkeit durch ein Magnetfeld schnell und reversibel veränderbar sind.

Abhängig vom Magnetfeld können magnetorheologische Flüssigkeiten eine Schubspannung aufnehmen. Wird die Fließgrenze überschritten, kann eine magnetorheologische Flüssigkeit als eine Flüssigkeit mit vom Magnetfeld abhängiger Viskosität betrachtet werden, beispielsweise wenn bei konstanter Drehzahl bzw. Scherrate abhängig vom Magnetfeld unterschiedliche Kräfte erzeugt werden können. In Folge werden zur einfacheren Beschreibung die rheologischen Eigenschaften der Flüssigkeit als Viskosität bezeichnet, wobei damit stets die scheinbare Viskosität in einem bestimmten Arbeitspunkt gemeint ist.

Das anisotrope Magnetfeld bewirkt, dass die magnetorheologische Flüssigkeit entlang des Umfangs scheinbar eine variierende Viskosität aufweist. Die Bereiche hoher Viskosität und niedriger Viskosität sind bezüglich der zweiten Welle fest, d.h. drehen sich mit der zweiten Welle um eine Drehachse. Auf die Flügel der ersten Welle wirkt deshalb in Abhängigkeit der relativen Winkelstellung der ersten Welle und zweiten Welle und des erzeugten Magnetfelds ein unterschiedliches Drehmoment. Die Flügel sind vorzugsweise so bemessen, dass sie in einer ersten Drehstellung der ersten Welle in die Bereiche erhöhter Viskosität eintauchen und in einer zweiten Drehstellung der ersten Welle außerhalb der Bereiche erhöhter Viskosität sind. Die Flügel haben keine rotationssymmetrische Gestalt.

Ein Motor kann beispielsweise die zweite Welle im Wesentlichen ohne Übertragung eines Drehmoments relativ zu der ersten Welle beschleunigen, wenn die Flügel in einem Bereich geringer Viskosität sind, um dann den aufgenommen Drehimpuls in kurzer Zeit als hohes Drehmoment abzugeben, wenn die Flügel in einen Bereich hoher Viskosität eintauchen.

Eine Ausgestaltung sieht vor, dass die Magnetfeldquelle Polschuhe beinhaltet, welche an der zweiten Welle in Umfangsrichtung versetzt an der Kammer angeordnet sind. Ein Permanentmagnet oder ein Elektromagnet kann das Magnetfeld erzeugen. Die Polschuhe lenken den Magnetfluss zu der oder in der Kammer, um möglichst ausgeprägte lokale Maxima (Pole) der Magnetfeldstärke zu erzeugen, in welchen die Flüssigkeit hohe Kräfte übertragen kann. Die Polschuhe können durch drehfest mit der zweiten Welle verbundene, weitere Flügel ausgebildet sein, welche axial mit den Flügeln der ersten Welle kämmend angeordnet sind. Zwischen den flügelförmigen Polschuhen kann eine hohe Magnetfeldstärke realisiert werden, wobei zugleich in Umfangsrichtung versetzt die Magnetfeldstärke rasch abnimmt.

Eine Ausgestaltung sieht vor, dass wenigstens einer der Flügel der ersten Welle durch eine Rolle ausgebildet ist, welche radial versetzt zu der ersten Welle angeordnet ist.

Eine Abmessung der Flügel in Umfangsrichtung kann geringer als 30 Grad sein. Eine Abmessung des Bereichs erhöhter Viskosität in Umfangsrichtung kann geringer als 30 Grad sein, insbesondere kann eine Abmessung der Polschuhe in Umfangsrichtung geringer als 10 Grad sein. Hierdurch ergeben sich große Bereiche mit geringer Viskosität zwischen den zähen Bereichen. Die zweite Welle kann gegenüber der ersten Welle beschleunigt werden, um dann schlagartig die aufgenommene Energie abzugeben, wenn die Flügel in einen zähen Bereich eintauchen.

Eine Handwerkzeugmaschine beinhaltet einen Motor, eine Werkzeugaufnahme und ein Schlagwerk nach einem der vorhergehenden Ansprüche, das in einen Antriebsstrang zwischen Motor und Werkzeugaufnahme geschaltet ist. Die Magnetfeldquelle kann einen Elektromagnet und eine einstellbare Stromquelle beinhalten. Ein Bedienelement ist zum Einstellen eines von der Stromquelle abgegebenen Stroms vorgesehen. Die Schlagwirkung kann vom Anwender kontinuierlich eingestellt und von einer Regelung überlagert werden, beispielsweise zur Temperaturkompensation oder um bestimmte Grenzwerte einzuhalten. In Abhängigkeit der Viskosität wird beim Eintauchen der Flügel in die zähe Flüssigkeit ein kurzes hohes Drehmoment oder eine länger andauerndes und niedriges Drehmoment abgegeben.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Schlagschrauber,
Fig. 2 und 3 ein Schlagwerk,
Fig. 4 und 5 ein Schlagwerk.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

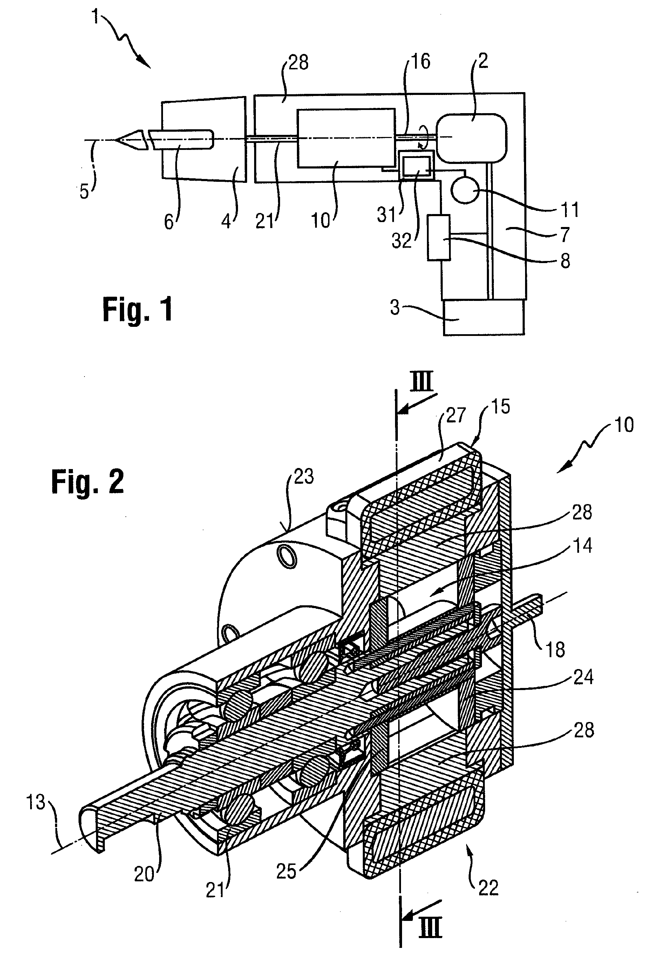

Fig. 1 zeigt als Beispiel einer Handwerkzeugmaschine einen elektrischen Schlagschrauber **1.** Der primäre Antrieb ist ein Elektromotor **2,** der beispielsweise über ein wiederaufladbares Batteriepaket **3** elektrisch gespeist ist. Eine Werkzeugaufnahme **4** wird im Betrieb durch den Elektromotor **2** drehend um eine Arbeitsachse **5** angetrieben. Die Werkzeugaufnahme **4** ist ausgelegt ein Schrauberbit, einen Bohrer oder andere Werkzeuge **6** lösbar aufzunehmen und die Drehbewegung auf dieses Werkzeug zu übertragen. Ein Anwender kann den Schlagschrauber **1** mittels eines Handgriffs **7** führen und mittels eines Systemschalters **8** in Betrieb nehmen. Der Schlagschrauber **1** hat ein Schlagwerk **10,** welches den Elektromotor **2** mit der Werkzeugaufnahme **4** koppelt. Das Schlagwerk **10** erzeugt aus dem gleichförmig abgegebenen Drehmoment des Elektromotors **2** ein pulsendes Drehmoment, welches an die Werkzeugaufnahme **4** weitergeleitet wird. Eine Amplitude der Drehmomentpulse ist mit einem Wahlschalter **11** einstellbar.

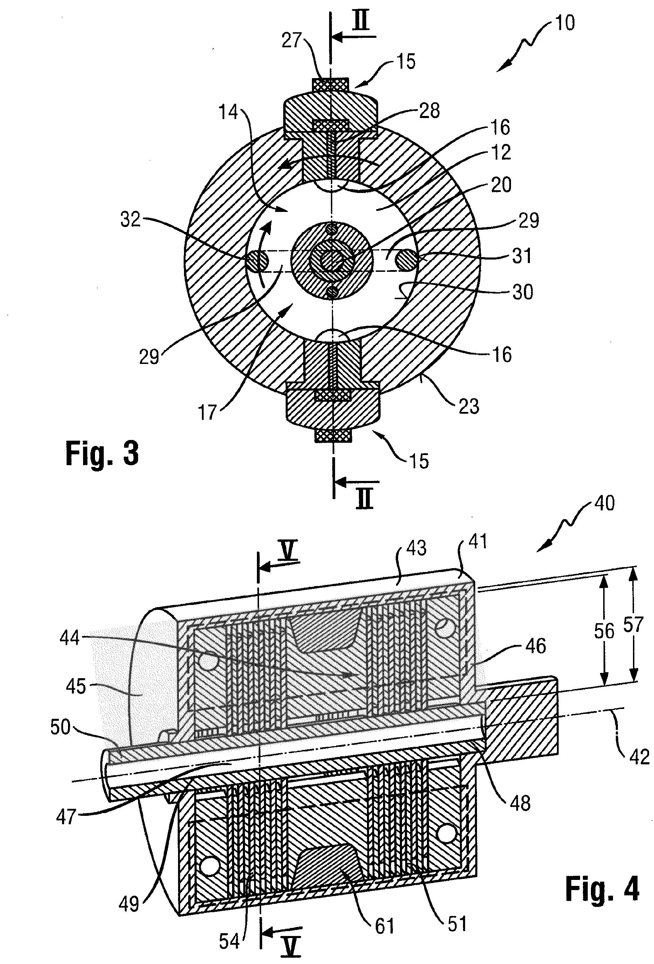

Fig. 2 zeigt das Schlagwerk **10** in einem Längsschnitt in der Ebene II-II und Fig. 3 das Schlagwerk **10** in einem Querschnitt in der Ebene III-III. Das beispielhafte Schlagwerk **10** hat ein Flügelrad **12,** das um eine Drehachse **13** drehbar in einer Kammer **14** angeordnet ist. Die Kammer **14** ist mit einer magnetorheologischen Flüssigkeit gefüllt. Magnete **15** sind an der Kammer **14** angeordnet, welche in an sie angrenzenden Bereichen **16** (zähe Bereiche) eine Viskosität der magnetorheologischen Flüssigkeit gegenüber anderen Bereichen **17** (dünnflüssigen Bereichen) lokal erhöhen. Eine Antriebswelle **18** dreht die Kammer **14** mit den Magneten **15** um die Drehachse **13.** Die dünnflüssigen Bereiche **17** vermitteln ein vernachlässigbar geringes Drehmoment auf das Flügelrad **12,** während die zähen Bereiche **16** ein Drehmoment auf das Flügelrad **12** übertragen. Entsprechend ergibt sich eine wirksame Drehmomentübertragung, wenn die Magnete **15** zu den Flügeln **19** der Flügelrads **12** gleichorientiert sind. Das Flügelrad **12** ist an eine Abtriebswelle **20** angebunden.

Die Antriebswelle **18** kann eine hohle Welle sein, in welcher in Wälzlagern **21** die Abtriebswelle **20** aufgehängt ist. Die Antriebswelle **18** und die Abtriebswelle **20** sind zueinander relativ um die Drehachse **13** drehbar.

Eine Trommel **22** ist in radialer Richtung durch eine mantelförmige Wand **23** der Antriebswelle **18** und längs der Drehachse **13** durch einen Boden **24** und einen Deckel **25** ausgebildet. Der Boden **24** und der Deckel **25** sind beispielhaft auf der Abtriebswelle **20** befestigt sein und gegenüber dem durch die hohle Welle ausgebildeten **18** Mantel **23** drehbar sein. Die Kammer **14** innerhalb der Trommel **22** ist dicht, in dem Sinne, dass die magnetorheologische Flüssigkeit nicht austreten kann. Der Deckel **25** hat ein abgedichtetes Lager **26,** durch welches die Abtriebswelle **20** in die Kammer **14** geführt ist. In der Kammer **14** ist das Flügelrad **12** drehfest auf der Abtriebswelle **20** aufgesetzt, z.B. mit einem Presssitz.

Die Magnete **15** sind in den Mantel **23** der Trommel **22** eingesetzt. Bei den beispielhaft zwei Magneten **15** sind diese diametral zu der Drehachse **13** angeordnet. Die beispielhaften Magnete **15** sind Elektromagnete. Spulen **27** der Magnete **15** können mit ihrer Achse senkrecht zu der Drehachse **13** und tangential zu einer Umfangsrichtung um die Drehachse **13** orientiert sein. Ein Polschuh **28** ist in den Mantel **23** eingesetzt und verbindet in radialer Richtung den Magnet **15** mit der Kammer **14.** Das von den Magneten **15** erzeugte Magnetfeld ist in der Kammer **14** nicht rotationssymmetrisch um die Drehachse **13,** sondern weist eine zweizählige Symmetrie, d.h. zwei Pole, auf.

Nicht dargestellte alternative Ausführungsformen können eine größere Anzahl von Magneten aufweisen, die vorzugsweise in äquidistanten Winkelschritten um die Drehachse **13** angeordnet sind, was eine entsprechend höhere Anzahl an Polen und eine mehrzähligen Symmetrie ausbildet. Zudem kann das Magnetfeld innerhalb oder außerhalb der Trommel erzeugt werden ohne dafür den Mantel durchbrechen zu müssen. Vorteilhaft ist es die Magnetfelderzeugung relativ zum Schlagschrauber ruhen zu lassen und nur einen Teil der Pole als Teil des Mantels rotieren zu lassen. Bevorzugt werden zur Magnetfelderzeugung Permanentmagnete bzw. eine Kombination von Permanentmagneten und Elektromagneten eingesetzt.

Die magnetorheologische Flüssigkeit hat in den Bereichen höchster Magnetfeldstärke, d.h. bei den Polen, die größte Viskosität. Bei den beispielhaft zwei Magneten **15** und somit zwei Polen bilden sich genau zwei zähe Bereiche **16** aus, welche an die Pole angrenzen. Eine Abmessung der zähen Bereich **16** ist in der Größenordnung der Abmessung des Polschuhs. Eine nicht-lineare Abhängigkeit der Viskosität von der Magnetfeldstärke begrenzt die Ausdehnung der zähen Bereiche **16.** Die dünnflüssigen Bereiche **17** haben einen deutlich größeren Anteil am Umfang um die Drehachse **13,** typischerweise zwischen 75 % und 90 %. Die Trommel und ein Teil des Polschuhs soll aus nicht ferromagnetischem Material hergestellt werden um das Magnetfeld lokal begrenzt an den radial inneren Bereichen der Polschuhe erzeugen zu können.

Das beispielhafte Flügelrad **12** hat genau zwei Flügel **29,** wobei auch nur ein oder auch mehrere Flügel eingesetzt werden können. Vorteilhafter Weise werden gleich viele Flügel wie Pole verwendet, es kann aber auch eine unterschiedliche Anzahl von Flügeln und Polen verwendet werden. Die Flügel **29** reichen bis zu der Innenfläche **30** des Mantels **23.** Beim Drehen der Trommel **22** kommen die Flügel 29 oder zumindest deren äußere Enden **31** in Kontakt mit den zähen Bereichen **16.** Ein Durchmesser des Flügelrads **12** kann bis auf ein radiales Spiel gleich dem Durchmesser der Kammer **14** sein, wobei die äußeren Enden **31** an der Innenfläche **30** entlanggleiten. Bei der dargestellten Ausführungsform sind die Flügel **29** durch Rollen **32** ausgebildet, welche an dem Boden 24 und an dem Deckel 25 befestigt sind. Die Rollen **32** können an der Innenfläche **30** abrollen.

Die Symmetrie des Flügelrads **12** ist vorzugsweise an die Drehsymmetrie des Magnetfeldes angepasst. Die äußeren Enden **31** der Flügel **29** kommen synchron in Kontakt mit den zähen Bereichen **16** bzw. sind gemeinsam in dünnflüssigen Bereichen **17.**

Solange die äußeren Enden **31** in den dünnflüssigen Bereichen **17** sind, kann der Elektromotor **2** die Antriebswelle **18** und die Trommel **22** nahezu ohne Gegenmoment beschleunigen. Die aufgebrachte Leistung des Elektromotors **2** wird in kinetischer Energie in der Antriebswelle **18** und der Trommel **22** gespeichert. Wenn die äußeren Enden **31** auf die zähen Bereiche **16** auftreffen, wird die Abtriebswelle **20** an die Trommel **22** angekoppelt. Das dabei maximal übertragbare Drehmoment hängt von der Viskosität des zähen Bereichs **16** ab, welche mit beeinflusst innerhalb welcher Wegstrecke die Trommel **22** abgebremst bzw. auf die Relativdrehzahl Null verzögert werden kann. Die Viskosität, insbesondere bei einer statischen Belastung der zähen Bereiche **16,** ist vorzugsweise nicht ausreichend, um das Flügelrad **12** bei einer blockierten Abtriebswelle **20** gegen das Drehmoment des Elektromotors **2** zu halten. Die Flügel **19** werden sich dabei durch den zähen Bereich **16** schieben und nachfolgend wieder in einen dünnflüssigen Bereich **17** gelangen.

Die Viskosität der zähen Bereiche **16** kann durch die Magnetfeldstärke gesteuert werden. Insbesondere ist eine Stromquelle **33** vorgesehen, die die Spulen **27** speist. Ein eingespeister Strom kann durch eine Steuerungseinrichtung **34** geschalten und/oder in der Amplitude eingestellt werden, um das Magnetfeld auf einen beliebigen Wert zwischen Null und dem maximalen Feld einzustellen. Der Strom kann auch zeitlich bzw. in Abhängigkeit von Sensorsignalen moduliert werden, zudem ist vorgesehen mehrere Spulen unabhängig voneinander ansteuern zu können.

Mittels der Steuerungseinrichtung **34** kann das maximal übertragbare Drehmoment mittelbar durch die Magnetfeldstärke eingestellt werden. Ferner kann die Steuerungseinrichtung **34** ermitteln, ob die Flügel **29** an den zähen Bereichen **16** anliegen und kann darauf ansprechend die Magnetfeldstärke absenken. Das Flügelrad **12** wird aktiv freigegeben und die Trommel **22** kann ohne das Flügelrad **12** beschleunigt werden. Das Erkennen des Anliegens kann beispielsweise mittels eines Positionssensors zum Erfassen einer relativen Lage von Flügelrad **12** und Trommel **14** oder eines Beschleunigungssensors zum Erfassen eines Aufpralls des Flügelrads **12** auf die zähen Bereiche **16** erfolgen.

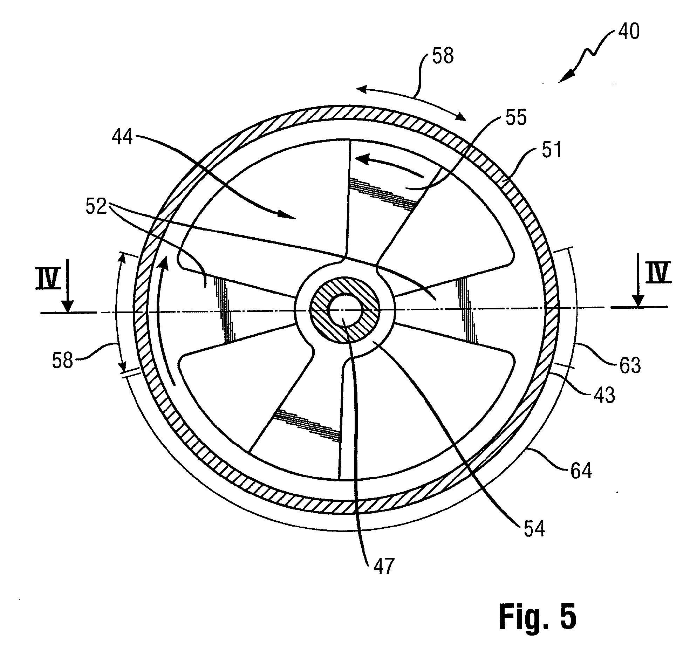

Fig. 4 zeigt ein Schlagwerk **40** in einem Längsschnitt in der Ebene IV-IV und Fig. 5 das Schlagwerk **40** in einem Querschnitt in der Ebene V-V. Das Schlagwerk **40** hat eine Trommel **41,** die um eine Drehachse **42** drehbar gelagert ist. Die Trommel **41** ist im Wesentlichen ein zu der Drehachse **42** rotationsförmiger Hohlkörper, vorzugsweise ein hohler Zylinder. Die von einem Mantel **43** der Trommel **41** radial umschlossene Kammer **44** ist längs der Drehachse **42** durch einen Boden **45** und einen Deckel **46** der Trommel **41** geschlossen. Ein Welle **47** ist innerhalb der Trommel **41,** d.h. in dem Hohlraum **44,** und koaxial zu der gemeinsamen Drehachse **42** angeordnet. Die Welle **47** ist relativ zu der Trommel **41** um die Drehachse **42** drehbar. Beispielsweise ist die Welle **47** in Drehlagern **48, 49** in der Trommel **41** aufgehängt. Ein abtriebsseitiger Abschnitt **50** der Welle **47** kann durch eine Öffnung in dem Deckel **46** hindurchgeführt sein. Die Öffnung ist beispielsweise als Drehlager **48** ausgebildet.

An dem Mantel **43** sind mehrere erste Flügelräder **51** axial zueinander versetzt angeordnet. Die ersten Flügelräder **51** sind alle gleich ausgebildet. Die ersten Flügelräder **51** können beispielsweise zwei erste Flügel **52** aufweisen, die radial in Richtung zu der Welle **47** vorstehend und berührungsfrei zu der Welle **47** sind. Die zwei ersten Flügel **52** sind vorzugsweise um 180 Grad zueinander um die Drehachse **42** versetzt. Bei einer größeren Anzahl von Flügeln **52** pro Flügelrad **51** sind diese vorzugsweise äquidistant um die Drehachse **42** angeordnet. Axial benachbarte erste Flügel **52** sind durch einen rotationssymmetrischen Spalt **53** getrennt. Die ersten Flügelräder **51** zueinander gleich um die Drehachse **42** ausgerichtet.

Auf der Welle **47** sind mehrere zweite Flügelräder **54** axial versetzt zueinander, in den rotationssymmetrischen Spalten **53** angeordnet. Zweite Flügel **55** der zweiten Flügelräder **54** stehen radial in Richtung zu dem Mantel **43** vor, wobei diese den Mantel **43** nicht berühren. Die Zahl der zweiten Flügel **55** pro zweiten Flügelrad **54** ist vorzugsweise gleich der Zahl der ersten Flügel **52** pro erstem Flügelrad **51.** Die zweiten Flügel **52** der zweiten Flügelräder **54** sind vorzugsweise äquidistant um die Drehachse **42** ausgerichtet.

Die Flügel **52, 55** sind beispielsweise dünne Eisenbleche, deren Abmessung längs der Drehachse **42** um wenigstens eine Größenordnung geringer als ihre Abmessung in radialer Richtung ist. Diese Abmessung ist etwa so groß wie die Breite der rotationssymmetrischen Spalten **53.** Ein Abstand benachbarter erster Flügel **52** längs der Drehachse **42** kann näherungsweise gleich einer Dicke der zweiten Flügel **55** sein und vice versa. Vorzugsweise sind die Flügel **52, 55** parallel zu Ebenen senkrecht zu der Drehachse **42.**

Radiale Abmessungen **56** der Flügel **52, 55** sind wenigstens etwas geringer als ein radialer Abstand **57** der ersten Welle **47** zu dem Mantel **43.** Die radialen Abmessungen **56** sind größer als 75 % des radialen Abstands **57,** z.B. größer als 90 % des radialen Abstands **57.** Die radialen Abmessungen **56** der ersten Flügel **52** und der zweiten Flügel **55** können verschieden gewählt sein. Die Summe der radialen Abmessungen **56** jedes ersten Flügels **52** mit seinem benachbarten zweiten Flügel **55** ist jedoch größer als der radiale Abstand **57,** um einen Überlapp längs der Drehachse **42** eines ersten Flügels **52** mit dem benachbarten zweiten Flügels **55** zu ermöglichen. Ein Überlapp längs der Drehachse **42** ist synonym für ein Überlapp in einer Projektion auf eine Ebene senkrecht zu der Drehachse **42.**

Die ersten Flügel **52** sind längs der Drehachse **42** versetzt zu den zweiten Flügeln **55** angeordnet. Keiner der ersten Flügel **52** überlappt mit einem der zweiten Flügel **55** in radialer Richtung. Die Trommel **41** mitsamt den ersten Flügeln **52** kann relativ gegenüber der ersten Welle **47** mitsamt den zweiten Flügeln **55** gedreht werden. Während des Drehens alternieren kämmende Stellungen und nicht-kämmende Stellungen. Bei den kämmenden Stellungen greifen die ersten Flügel **52** berührungsfrei zwischen die zweiten Flügel **55** derart ein, dass die ersten Flügel **52** und die zweiten Flügel **55** längs der Drehachse **42** wenigstens teilweise überlappen. Bei den nicht-kämmenden Stellungen sind die ersten Flügel **52** derart gegenüber den zweiten Flügeln **55** gedreht, dass diese längs der Drehachse **42** nicht überlappen.

Eine Abmessung **58** in Umfangsrichtung (Winkelabmessung) der Flügel **52, 55** ist derart gewählt, dass die nicht-kämmenden Stellungen einen wenigstens so großen Drehwinkel abdecken wie die kämmenden Stellungen. Bei der beispielhaften Ausführungsform haben die Flügel **52, 55** eine Winkelabmessung **58** von etwa 30 Grad und es sind in einer Ebene jeweils zwei erste Flügel **52** 1bzw. zwei zweite Flügel **55** angeordnet. Die ersten Flügel **52** kämmen mit den zweiten Flügeln **55** pro Drehung zweimal für etwa 180 Grad und sind pro Drehung zweimal für etwa 180 Grad nicht-kämmend. Vorzugsweise sind in einer Ebene jeweils zwei, drei oder vier Flügel **52, 55** symmetrisch angeordnet. Eine Summe der Winkelabmessungen **58** der einzelnen Flügel **52, 55** einer Ebene liegt vorzugsweise in einem Bereich zwischen 30 Grad und 60 Grad. Die Winkelabmessung **58** der ersten Flügel **52** und zweiten Flügel **55** kann verschieden gewählt sein. Die Zahl der ersten Flügel **52** und zweiten Flügel **55** in benachbarten Ebenen ist gleich. Die ersten Flügel **52** sind vorzugsweise alle in gleichen Winkelpositionen bezüglich des Mantels **43** und die zweiten Flügel **55** sind vorzugsweise alle in gleichen Winkelpositionen bezüglich der Welle **47** angeordnet, wodurch sämtliche Flügel **52, 55** synchron in kämmenden oder nicht-kämmenden Stellungen sind.

Eine Magnetspule **61** ist in der Trommel **41** koaxial zu der Drehachse **42** angeordnet und von einer Stromquelle **62** gespeist. Die ersten Flügel **52** sind aus einem magnetisierbaren Material und führen das Magnetfeld, die ersten Flügel **52** dienen als Polschuhe. Eine Magnetfeldstärke ist in dem Winkelbereich **63** der ersten Flügel **52** höher, als in Winkelbereichen **64** zwischen den ersten Flügeln **52.**

Der Hohlraum **44** zwischen dem Mantel **43** und der Welle **47** ist zumindest teilweise mit einer magnetorheologischen Flüssigkeit gefüllt. Eine Viskosität der magneto-rheologischen Flüssigkeit ist aufgrund des anisotropen Magnetfeldes in den Winkelbereichen **63** der ersten Flügel **52** größer als den verbleibenden Winkelbereichen **64.** Eine Drehmomentübertragung von der Trommel **41** auf die Welle **47** ist in einer kämmenden Stellung höher als bei einer nicht-kämmenden Stellung. Der antreibende Elektromotor **2** kann während nicht-kämmender Stellungen die Trommel **41** beschleunigen und den aufgenommenen Drehimpuls während der kämmenden Stellung an die Welle **47** abgeben.

## Patentansprüche

1. Schlagwerk (10) mit
einer ersten Welle (20), auf der ein oder mehrere Flügel (19) befestigt sind,
einer zweiten Welle (17) mit einer Kammer (14), in welcher die Flügeln (19) drehbar angeordnet sind und welche mit einer Flüssigkeit gefüllt ist, und
einer im Bereich der zweiten Welle (17) angeordnete Magnetfeldquelle (18), welche innerhalb der Kammer (14) ein in Umfangsrichtung um die Welle (17) räumlich moduliertes Magnetfeld generiert **dadurch gekennzeichnet, dass**
die Flüssigkeit magnetorheologisch ist.

2. Schlagwerk nach Anspruch 1, **dadurch gekennzeichnet, dass** das Magnetfeld in der Kammer (14) Bereiche mit einer erhöhten Viskosität der magnetorheologischen Flüssigkeit induziert und die Flügel (19) in einer ersten Drehstellung der ersten Welle (20) in die Bereiche (16) erhöhter Viskosität eintauchend sind und in einer zweiten Drehstellung der ersten Welle (20) außerhalb der Bereiche erhöhter Viskosität (16) sind.

3. Schlagwerk nach Anspruch 1, **dadurch gekennzeichnet, dass** durch die magnetorheologische Flüssigkeit in den Drehstellungen, in denen die Flügel (19) in Bereichen mit hohem Magnetfeld sind, ein höheres Drehmoment übertragen als in den Drehstellungen, in denen die Flügel (19) in Bereichen mit schwachem oder ohne Magnetfeld sind.

4. Schlagwerk nach Anspruch 1 oder 2, **dadurch gekennzeichnet, dass** die Magnetfeldquelle Polschuhe (28) beinhaltet, welche an der zweiten Welle (17) in Umfangsrichtung versetzt an der Kammer (14) angeordnet sind.

5. Schlagwerk nach Anspruch 4, **dadurch gekennzeichnet, dass** die Polschuhe (54) durch drehfest mit der zweiten Welle (41) verbundene, weitere Flügel ausgebildet sind, welche axial mit den Flügeln (54) der ersten Welle (47) kämmend angeordnet sind.

6. Schlagwerk nach einem der vorhergehenden Ansprüche 1 bis 4, **dadurch gekennzeichnet, dass** mindestens einer der Flügel durch eine Rolle ausgebildet ist, welche radial versetzt zu der ersten Welle angeordnet ist.

7. Schlagwerk nach einem der vorhergehenden Ansprüche, **dadurch gekennzeichnet, dass** eine Abmessung der Flügel in Umfangsrichtung geringer als 30 Grad ist.

8. Schlagwerk nach Anspruch 3, **dadurch gekennzeichnet, dass** eine Abmessung des Bereichs erhöhter Viskosität in Umfangsrichtung geringer als 30 Grad ist.

9. Handwerkzeugmaschine (1) mit einem Motor (2), einer Werkzeugaufnahme (4) und einem Schlagwerk (10) nach einem der vorhergehenden Ansprüche, das in einen Antriebsstrang zwischen Motor (2) und Werkzeugaufnahme (4) geschaltet ist.

10. Handwerkzeugmaschine nach Anspruch 9, **dadurch gekennzeichnet, dass** die Magnetfeldquelle (18) einen Elektromagnet (33) und eine einstellbare Stromquelle (32) beinhaltet, und ein Bedienelement zum Einstellen eines von der Stromquelle abgegebenen Stroms vorgesehen ist.

## Claims

1. Striking mechanism (10) having a first shaft (20) to which one or more vanes (19) are fastened, a second shaft (17) having a chamber (14) in which the vanes (19) are arranged to be rotatable and which is filled with a fluid, and a magnetic field source (18), arranged in the region of the second shaft (17), which generates within the chamber (14) a magnetic field which is spatially modulated in the circumferential direction about the shaft (17), **characterised in that** the fluid is magnetorheological.

2. Striking mechanism according to claim 1, **characterised in that** the magnetic field produces in the chamber (14) regions in which the magnetorheological fluid is of an increased viscosity, and the vanes (19) penetrate into the regions (16) of increased viscosity when the first shaft (20) is in a first rotary position and are outside the regions of increased viscosity (16) when the first shaft (20) is in a second rotary position.

3. Striking mechanism according to claim 1, **characterised in that** a higher torque is transmitted by the magnetorheological fluid in those rotary positions in which the vanes (19) are in regions subject to a high magnetic field than is transmitted in those rotary positions in which the vanes (19) are in regions subject to a weak or non-existent magnetic field.

4. Striking mechanism according to claim 1 or 2, **characterised in that** the magnetic field source comprises pole shoes (28) which are arranged against the second shaft (17) and against the chamber (14) with an offset in the circumferential direction.

5. Striking mechanism according to claim 4, **characterised in that** the pole shoes (54) are formed by further vanes which are connected to the second shaft (41) to be solid in rotation therewith and which are arranged to be interleaved axially with the vanes (54) on the first shaft (47).

6. Striking mechanism according to one of preceding claims 1 to 4, **characterised in that** at least one of the vanes is formed by a roller which is arranged to be offset radially from the first shaft.

7. Striking mechanism according to one of the preceding claims, **characterised in that** the size of the vanes in the circumferential direction is less than 30°.

8. Striking mechanism according to claim 3, **characterised in that** the size of the region of increased viscosity in the circumferential direction is less than 30°.

9. Hand-held power tool (1) having a motor (2), a tool receiving means (4), and a striking mechanism (10) according to one of the preceding claims which is inserted in a drive train between the motor (2) and the tool receiving means (4).

10. Hand-held power tool according to claim 9, **characterised in that** the magnetic field source (18) comprises an electromagnet (33) and an adjustable power source (32), and a control is provided for adjusting a current supplied by the power source.

## Revendications

1. Mécanisme de percussion (10) comportant :
un premier arbre (20) sur lequel sont fixées une ou plusieurs ailettes (19),
un second arbre (17) ayant une chambre (14), dans laquelle les ailettes (19) sont agencées de façon à pouvoir tourner et qui est remplie avec un liquide, et
une source de champ magnétique (18) agencée dans la zone du second arbre (17), laquelle source de champ magnétique génère à l'intérieur de la chambre (14) un champ magnétique spatialement modulé dans une direction circonférentielle autour de l'arbre (17), **caractérisé en ce que**
le liquide est magnéto-rhéologique.

2. Mécanisme de percussion selon la revendication 1, **caractérisé en ce que** le champ magnétique dans la chambre (14) induit des zones à viscosité accrue du liquide magnéto-rhéologique et les ailettes (19) sont plongées dans les zones (16) à viscosité accrue dans une première position de rotation du premier arbre (20) et sont à l'extérieur des zones à viscosité accrue (16) dans une seconde position de rotation du premier arbre (20).

3. Mécanisme de percussion selon la revendication 1, **caractérisé en ce que** par l'intermédiaire du liquide magnéto-rhéologique un couple transmis dans les positions de rotation, dans lesquelles les ailettes (19) sont dans des zones ayant un champ magnétique élevé, est plus élevé que dans les positions de rotation dans lesquelles les ailettes (19) sont dans des zones à champ magnétique faible ou inexistant.

4. Mécanisme de percussion selon la revendication 1 ou 2, **caractérisé en ce que** la source de champ magnétique contient des épanouissements polaires (28) qui sont agencés sur la chambre (14) sur le second arbre (17) de manière décalée dans une direction circonférentielle.

5. Mécanisme de percussion selon la revendication 4, **caractérisé en ce que** les épanouissements polaires (54) sont formés par des ailettes supplémentaires, reliés au second arbre (41) de manière non rotative, lesquelles ailettes sont agencées de manière à s'imbriquer axialement selon un agencement en forme de peigne avec les ailettes (54) du premier arbre (47).

6. Mécanisme de percussion selon l'une des revendications 1 à 4 précédentes, **caractérisé en ce qu'**au moins une des ailettes est formée par un rouleau qui est radialement décalé par rapport au premier arbre.

7. Mécanisme de percussion selon l'une des revendications précédentes, **caractérisé en ce qu'**une dimension des ailettes dans la direction circonférentielle est inférieure à 30 degrés.

8. Mécanisme de percussion selon la revendication 3, **caractérisé en ce qu'**une dimension de la zone à viscosité accrue dans la direction circonférentielle est inférieure à 30 degrés.

9. Machine-outil manuelle (1) comportant :
un moteur (2), un mandrin (4) et un mécanisme de percussion (10) selon l'une des revendications précédentes, qui est raccordé dans une transmission entre le moteur (2) et le mandrin (4) .

10. Machine-outil manuelle selon la revendication 9, **caractérisée en ce que** la source de champ magnétique (18) contient un électroaimant (33) et une source de courant réglable (32), et un organe de commande est prévu pour régler un courant délivré par la source de courant.
